# EUROPEAN PATENT SPECIFICATION

(11) **EP 2 189 734 B1**
(45) Date of publication and mention of the grant of the patent: **01.06.2016**
(21) Application number: 09176373.0
(22) Date of filing: 18.11.2009
(51) Int. Cl.: F24H 9/20, H05B 1/02, B60H 1/22

(54) **Heater controller**
Heizersteuerung
Commande chauffage

(30) Priority: 19.11.2008 EP 08169467
(43) Date of publication of application: 26.05.2010
(73) Proprietor: Mahle Behr France Rouffach S.A.S, 68250 Rouffach (FR); GND S.A., 46980 Paterna (ES)
(72) Inventor: Kraus, Jochen, Pta. 3, 46112 Valencia-Masarrochos (ES); Gries, Jean-Philippe, 68000 Colmar (FR); Delamarche, Jean-Luc, 68520 Burnhaupt-le-Bas (FR); Schmittheisler, Christophe, 67680 Epfig (FR); Navalón Carretero, Herminio, 16200 Motilla del Palancar (ES)
(74) Representative: Grauel, Andreas

(56) References cited:
- WO-A-99/40375
- DE-A1- 4 142 838
- DE-A1- 4 401 670
- DE-A1- 4 416 798
- US-A1- 2001 033 743

## Description

The present invention relates to a heater controller according to the preamble of claim 1.

Conventional cars mostly use a combustion motor for propulsion which has the favorable effect that the waste heat of the combustion engine can be used for heating the interior of a passenger cabin of the car or vehicle. However, in the near future more and more cars or vehicles will be powered by hybrid motors or exclusively by electric motors. As electric motors or hybrid motors do not provide large amounts of waste heat there is a problem, especially in winters, to heat the passenger cabin sufficiently so as to provide a comfortable temperature for the passengers in the cabin of the vehicle. In order to provide such a comfortable heat a separate heating element has to be used.

This separate heating element is mostly connected with the vehicle-battery (or an accumulator) which also provides the power for the electric motor of the propulsion system. As the battery (or the accumulator) of such a car or vehicle with said hybrid motor or a single electric motor usually has to provide a high electric power such that the batteries usually have a high voltage output of, for example, more than 100V, especially about 300 V. If, in contrast, a conventional vehicle battery is used (which just provides voltages about 12 to 24 V) the necessary high electric power for the electric motors of the hybrid cars requires a very high current which, in turn, results in a high energy loss due to an unintentional warming up of electric components handling these currents.

However, there is a problem in controlling the heating elements due to the fact that these heating elements are supplied with power of high voltage networks which are implemented in new generations of electrical vehicles. This problem can be seen in a connection of the high voltage power switch which is directly connected to the battery (providing said high voltage) wherein the switching strategy is given by the control circuit of the electronics which normally is configured for handling low voltages. Therefore the switching elements have to comprise power electronic components in order to adequately switch the power from the battery. However, in case of failure of these switching components, the heating element stages (sometimes also denoted as heating levels) can continue to heat air without the possibility to interrupt the current from the power supply. The result of a failure of the switching element will be a continuous drain of current of the heating element such that it has to be replaced as otherwise the battery of the vehicle will be unloaded very quickly by the damaged switching element and the heating element.

According to state-of-the-art solutions which are published for example in EP1630013 or EP1630923 a supervision of the correct function of the switching element is performed wherein the switching element is connected between the heating elements and a high-voltage power supply contact. The positioning of the switching elements on the high voltage side of the heating elements has the advantage to control the curent flowing through the heating elements before it nters these heating elements such that in the case of a defect of the heating elements or the switching element the current flow can be disconnected at an early stage in its way through the heater. However the positioning of the switching elements in the high voltage side (also denoted as high side) of the heater has the disadvantage that for example due to cracks in the wafer material of the power electronic switches a short-circuit in such a switch can cause a complete damage of the switching element which, in turn, results in the above mentioned uninterruptable and continuous flow of current via the defect switching element through the heating element. This would result in a very quick discharge of the battery.

WO 99/40375 A discloses a fluid heating device utilizing at least one electric heating element and a heat exchanging vessel and an electrical relay located at the exterior surface of said heat exchange vessel.

More precisely, document WO99/40375 A discloses a heater controller for supervising a heating element, the heater controller comprising the following features:
- a power connection port for connecting the heater controller with a power source, the power connection port having an input contact and an output contact, :
- a heating element connection port for connecting the heater controller with at least one heating element, the heating element connection port having a first and a second connection contact,
- a first switching element being connected between the input contact and the first contact of the heating element connection port, the first switching element being configured for switching power signals,
- a serial connection, comprising a second switching element, the serial connection being connected between the second contact of the heating element connection port and the output contact, and
- a control element being connected to the first and second switching element, the control element being configured for providing a first control signal to the first switching element to switch the first switching element in an on-state or in an off-state, wherein the control element being furthermore configured for providing a second control signal to the second switching element to disconnect an electrical connection between the second connection contact and the output contact in the case the first switching element fails in a time interval in which the control element controls the first switching element in the off-state.

Therefore it is the object of the present invention to provide a heater controller having a more secure and reliable function of disconnecting a heating element from the power supply even in the case the main switch is damaged.

This object is achieved by a heater controller according to claim 1.

The present invention provides a heater controller for supervising a heating element in a vehicle, the heater controller comprising the following features:
- a power connection port for connecting the heater controller with a power source, the power connection port having an input contact and an output contact;
- a heating element connection port for connecting the heater controller with at least one heating element, the heating element connection port having a first and a second connection contact;
- a first switching element being connected between the input contact and the first contact of the heating element connection port, the first switching element being configured for switching power signals;
- a serial connection comprising a second switching element and a current sensor, the serial connection being connected between the second contact of the heating element connection port and the output contact, the current sensor being configured for providing a current signal representing a current through the current sensor; and
- a control element being connected to the first and second switching element as well as to the current sensor, the control element being configured for providing a first control signal to the first switching element to switch first switching element in an on-state or in an off-state, wherein the control element being furthermore configured for receiving the current signal from the current sensor and for providing a second control signal to the second switching element to disconnect an electrical connection between the second connection contact and the output contact in the case the current signal indicates a current through the current sensor in a time interval in which the control element controls the first switching element to be in the off-state,
wherein the first switching element is configured for detecting a short-circuit through the first switching element, wherein the first switching element is furthermore configured for bringing the first switching element in an off-state if a short-circuit is detected in the first switching element.

The present invention is based on the finding that a more secure switching-off of power can be accomplished by a control unit which is positioned between the heating element (respectively a contact thereof) and an output contact which is preferably connectible to a ground potential. This control unit can comprise a serial connection of a switching element and a current sensor which are both in contact with said control element. Furthermore, the control element is connected to the first switching element which is connected between a (high voltage) input contact and a heating element (respectively a contact thereof). If the first switching element is damaged such that, for example, a short-circuit results in a continuous current flowing through the heating element it is now possible to switch off the respective heating element by the second switching element of the control unit. In order to accomplish this switching-off of current by the second switching element the control element uses a signal of the current sensor indicating a current during the time interval in which the first switching element should be closed. As normally no current should flow in a time interval in which the first switching element is in an off-state it is clear that the first switching element is damaged if a current is detected in such a time interval. In order to detect such a malfunction of the first switching element a comparison of the signals of the current sensor with the first control signal can be performed which controls the state in which the first switching element should be. On the basis of the result of the comparison, the second control signal can be generated in order to bring the second switching element in an off-state. By bringing the second switching element in the off-state a continuous current flowing through the heating element can be suppressed even in the case of a defect in the first switching element.

The present invention provides the advantage that a more secure and reliable heater controller can be created which has superior characteristics with respect to the state-of-the-art concerning a secure switching-off of the heating elements in order to prevent the power supply of the vehicle from being discharged unintentionally. Furthermore the positioning of the control unit in the low voltage side of the heater controller (i.e. after the heating element in a current flow) has the advantage that the second switching element can be configured for only switching low voltages, which on the one side opens the possibility of using inexpensive electronic elements and, on the other side, provides the chance for a very precise switching characteristic. As the second switching element is implemented on a low voltage side of the heater controller the risk of a damage of said second switching element by high potentials of the power supply is furthermore reduced such that the security and reliability of the inventive heater controller is increased in comparison to the state-of-the-art heater controllers.

According to an embodiment of the present invention the second switching element can be configured for switching between an on-state and an off-state, wherein the second switching element initially is in the on -state. Such an embodiment of the present invention provides the advantage that the heater controller can be used normally again after a malfunction of the first switching element is repaired. This repair of the first switching element can for example be accomplished by a cooling down of the first switching element as the malfunction may just be a result of excessive heat. Compensation can then be done on the other stages. In contrast, if the second switching element is just a fuse the heater controller (at least the respective heating element stage) cannot be used anymore such that the heater controller itself has to be exchanged in order to remedy the malfunction which would be much more expensive.

According to another embodiment of the present invention the second switching element can be configured for switching voltage signals. Such an embodiment of the present invention provides the advantage that inexpensive electronic components can be used in order to provide said secure and reliable characteristics of the heater controller in contrast to state-of-the-art heater controllers. Furthermore, a quick switching-off of current flowing through the first switching element in a malfunction-situation of the first switching element can be guaranteed as low voltage switching elements usually have a faster switching characteristic than high-voltage switching elements.

In another embodiment of the present invention the first switching element provides the advantage that a well-established power electronics component is used for switching the current through the heating elements such that the risk of suffering damage in the first switching element can be strongly reduced.

In addition, according to a further embodiment of the present invention, the second switching element provides the advantage that also well-established components with quick switching characteristics are used such that in the case of a malfunction of the first switching element a prompt switching-off is guaranteed.

In order to provide a compact heater controller which is already equipped with the respective heating elements the heater controller can comprise at least one heating element, especially a PTC heating element, which is connected between the first and second connection contact of the heating element connection port. Using PTC heating elements provides the advantage that these heating elements have a favorable characteristic in a case of a malfunction of the first switching element as in a short-circuit situations the resistance of these heating elements rises, which, in turn, results in a lower current flowing through said heating element in the case of de short-circuit in the first switching element while the second switching element is still in an on-state. If the second switching element now also fails to disconnect the heating element from the output contact the PTC heating element (due to its rising resistance characteristics) ensures a minimal waste of power such a that the power of vehicle battery can be longer preserved.

According to the present invention the first switching element is configured for detecting a short-circuit through the first switching element, wherein the first switching element is furthermore configured for bringing the first switching element in an off-state if a short circuit is detected in the first switching element. The invention provides the advantage that the short-circuit detection in the first switching element is done in hardware such that it is extremely fast and does not depend on the state of the control element. As a short-circuit in the first switching element normally results from a "fusing" of the electronic component used as first switching element such that a detection of such a fusing in an early stage enables the chance of timely bringing the first switching element in an off-state such that a permanent short-circuit of the first switching element can be prevented.

Furthermore, according to another embodiment of the present invention the heater controller comprises a safety relay being connected between the serial connection and the output contact or being connected between the input contact and the first switching element. The safety relay can, for example, be a fuse or a mechanical relay opening a connection in response to excess heat or excess current. Such an embodiment of the present invention provides the advantage that an additional (redundant) protection can be implemented in order to avoid an overheating of the heater controller (such that it might catch fire due to a high current) and damage other parts of the vehicle.

In another embodiment of the present invention the heating element connection port has a third and a fourth connection contact, the third connection contact being connected to the input contact via the first switching element or a third switching element, the heater controller furthermore having a second serial connection comprising a fourth switching element and a second current sensor for providing a second current signal indicating a current through the second current sensor, the second serial connection being connected between the fourth contact of the heating element connection port and the output contact and wherein the control element being connected to the fourth switching element and the second current sensor, the control element being furthermore configured for providing the first control signal to the first switching element or for providing a third control signal to the third switching element to switch the third switching element in an on-state or in an off-state, the control element being furthermore configured for receiving the second current signal from the second current sensor and for providing a fourth control signal to the fourth switching element to disconnect an electrical connection between the fourth connection contact and the output contact in the case the second current signal indicates a current through the second current sensor while the first and/or the third switching element is in off-state. This embodiment of the present invention provides the advantage that at least two stages of heating elements can be separately controlled in a secure and reliable way such that each of these heating element stages can separately be disconnected from the input contact respectively output contact of the heater controller. This opens the possibility of providing a very flexible heater controller which must not be replaced if one single high side switch is damaged. Rather, the heating element stage having the damaged high-side switch is (reversibly) disconnected from the input contact respectively output contact such that the charge in the vehicle battery can be preserved. Moreover, the positioning of the controller unit having the second switching element as well as the fourth switching element with the respective current sensors in the low-side provides the advantage of a precise and timely switching characteristic as well as the use of inexpensive electronic components which do not have to stand high potentials.

According to another embodiment of the present invention in which the heater controller comprises the first and the third switching element, the control element can be configured for switching the second switching element in an off-state if the second current signal indicates a current through the second current sensor in a time interval in which the third switching element is in an off-state and/or wherein the control element is configured for switching the fourth switching element in an offstate if the current signal indicates a current through the current sensor while the first switching element is in an off-state. Such an embodiment of the present invention provides the advantage that the control element can switch off more than just one heating element stage in the case a short-circuit is detected in one of the heating element stages. This switching-off of more than just the respective heating element stage having the damaged switching element provides the advantage that the current load of the heating element stages which function correctly does not exceed a specific level. This high current load in the case of a malfunction of one heating element stage might be a result as the current which normally would pass the heating element stage which is damaged now reallocates on the error-free heating element stages such that an excess current load in the these error-free heating element stages might occur if an electronic contact in the these heating element stages is not disconnected.

According to a further embodiment of the present invention the controller element can be configured for controlling the first and third switching elements such that the time intervals of the on-states of the first and third switching elements are phase shifted. Such an embodiment of the present invention provides the advantage that due to the phase shifted on-states of the first and third switching elements high peaks of power drain from the power supply can be avoided. Rather, the power supply can supply a continuous current to the heater controller which then allocates this received current on different heating element stages by a phase-shifted opening and closing of respective high-side switches.

Additionally the heater controller may comprise a galvanic isolation element which is arranged to galvanically isolate the control element on a first side from the first switching element and the serial connection on a second side. Such a configuration provides the advantage that the damageable components of the control element can be effectively protected against a breakthrough of high-voltage originating from the input contact and the output contact.

According to another embodiment of the present invention the heater controller may comprise a galvanic isolation element which is arranged to galvanically isolate the control element, the first switching element and the serial connection on a first side from a signal bus on a second side, wherein the signal bus is configured to provide control signals to the control element in order to control operations of the control element. Such a configuration provides the advantage that especially further components being connected to said signal bus can be effectively protected. In this situation a damage of the PTC heater elements does not result in a damage of numerous components which are distributed over the complete vehicle and which are connected to said signal bus, which may be for example a CAN bus or the like.

Also a voltage reduction element can be coupled between the input contact and the first switching element or the first driver element, wherein the voltage reduction element is configured for reducing the voltage between the input contact and the output contact and for providing a reduced voltage to the first switching element or the first drive element. Such a voltage reduction element provides the advantage that a low-level voltage which is mostly needed for properly operating the high-side switch or switches can be directly provided from the voltage between the input contact and the output contact. Thus, it is not necessary to provide a low-level voltage path through the galvanic isolation element 199 which, in turn, improves the protection of the components galvanically separated from the input and output contacts.

In another embodiment of the present invention the control element can be configured to compare the signal received from the current sensor in an off-state of the first switching element with an expected signal from the current sensor when the first switching element is in off-state and wherein the control element is furthermore configured for outputting an error signal, if the received signal from the current sensor departs from the expected signal by more than a predefined value. Such a failure test can thus be based on a comparison of the received signals with a reference value which may be either determined during a drafting process of the heater controller circuit or by reference measurements carried out under laboratory conditions. Such an embodiment of the present invention provides the advantage that a test for failure can be accomplished for example before the first high-side switch or high-side switching element is turned into an on-state. This, in turn, avoids damage to components of the heater controller as in the on-state usually high currents flow through the different heater stages which may cause an overheating of different areas of the heater controller if one of the heater stages is damaged.

According to another embodiment of the present invention the control element may be configured to compare the signal received from the current sensor in an on-state of the first switching element with an expected signal from the current sensor when the first switching element is in on-state and wherein the control element is further-more configured for outputting an error signal, if the received signal from the current sensor departs from the expected signal by more than a predefined value. As mentioned in the previous paragraph the failure test can also be based on a comparison of the received signals with a reference value which may be either determined during the drafting process of the heater controller circuit or by reference measurements carried out under laboratory conditions. A thus configured embodiment of the present invention provides the advantage that a continuous supervision of the components of the heater controller stages can be carried out. Especially a comparison of the measured values with an estimated value directly after a transition from the off-state to the on-state offers the possibility to quickly determine a possible failure of components of distinct heater controller stages. Thus a fast reaction on a detected failure can be realized in order to protect components of further heater stages form being damaged.

Embodiments of the present invention will be described below more precisely with respect to the following figures in which
- Fig. 1: shows a block diagram of an embodiment of the present invention;
- Fig. 2: shows a flow diagram of an embodiment of the present invention;
- Fig. 3: shows a block diagram of an embodiment of the present invention; and
- Fig. 4: shows a block diagram of another embodiment of the present invention.

It has to be mentioned that in the description of the embodiments of the present invention several features of the invention are used. However, it is clear to a skilled person that these features do not necessarily have to be combined such that also individual features can be used alone to embody the invention.

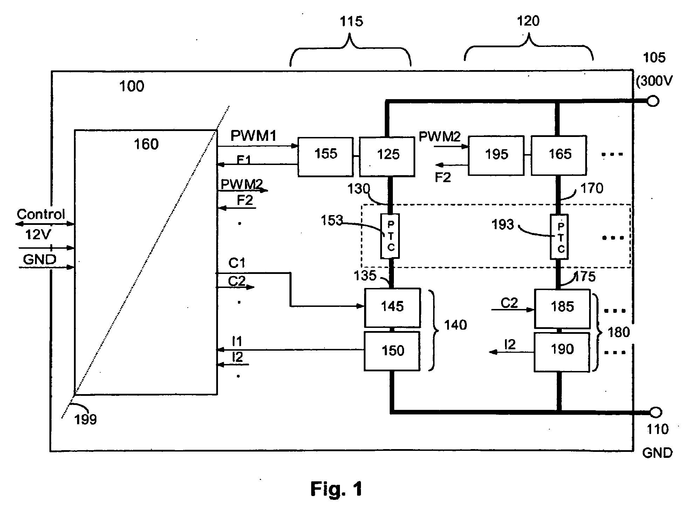

Figure 1 shows a block diagram of a heater controller 100 as an embodiment of the present invention. The heater controller 100 comprises an input contact 105 and an output contact 110 wherein the input contact 105 can be connected to a positive (or negative) contact of a vehicle battery whereas the output contact 110 can be contacted with a ground potential. As new types of vehicles will have strong electric motors as exclusive propulsion system or as an auxiliary propulsion system in a hybrid motor the vehicle battery will provide high voltages of for example 300 V such that a voltage of, for example, 300 V is provided between the input contact 105 and the output contact 110. Furthermore, according to Figure 1, the heater controller 100 comprises a first heating element stage (or level) 115 and a second heating element stage (or level) 120 which are connected in parallel between the input contact 105 and the output contact 110. Nevertheless the first and second heating element stages 115 and 120 are just chosen for exemplary purposes such that the heater controller 100 can also comprise further heating element stages (which for example also comprise analog elements as the first and second heating element stages) which are, however, not shown in Figure 1 for reasons of simplicity.

The first heating element stage 115 comprises a first switching element 125 which may be a power electronic element and which is connected between the input contact 105 and a first contact 130 of a heating element connection port. Furthermore, the first heating element stage 115 comprises a second contact 135 of the heating element connection port which is connected via a serial connection 140 to the output contact 110, the serial connection 140 comprising a second switching element 145 and a first current sensor 150. Between the first contact 130 of the heating element connection port and the second contact 135 of the heating element connection port a PTC heater resistor 153 may be contacted which, in use of the heater controller 100, heats at least a portion of air for conditioning the passenger cabin. Nevertheless, the PTC heater resistor 153 (as heating element) needs not necessarily be already contacted with the heating element connection port when the heater controller 100 is delivered to the customer. Additionally, the heating element 153 may also be located at an external position from the heater controller 100 such that the heater controller 100 as shown in Figure 1 can be positioned at any place in the vehicle.

The first switching element 125, which also can be denominated as "high-side switch" (due to the connection with the high potential of the power supply via the input contact 105), is connected to a first driver 155 which, in turn, receives a first control signal PWM1 from a control element 160. The control element 160 may be an electronic component like a digital signal processor, a microprocessor, an application specific integrated circuit or the like which is capable of processing signals and outputting the control signals to the switching elements. The first driver 155 may also transmit an error signal F1 to the control element 160 in the case an error in the first switching element 125 is detected. Furthermore the first current sensor 150 of the serial connection 140 may also transmit a (first) current signal I1 to the control element 160 whereas the second switching element 145 can receive a second control signal C1 from the control element 160.

The second heating element stage 120 can be built similarly to the first heating element stage 115. Thus, the second heating element stage may comprise a third switching element 165 which may also be a power electronic element (like an IGBT, a thyristor, a triac or a diac) and which is connected between the input contact 105 and a third contact 170 of the heating element connection port. Furthermore, the second heating element stage 120 comprises a fourth contact 175 of the heating element connection port which is connected via a second serial connection 180 to the output contact 110, the second serial connection 180 comprising a fourth switching element 185 and a second current sensor 190. Between the third contact 140 of the heating element connection port and the fourth contact 175 of the heating element connection port a second PTC heater resistor 193 may be contacted which, in use of the heater controller 100, again heats at least a portion of air for conditioning the passenger cabin of the vehicle. Nevertheless, the second PTC heater resistor 193 (as second heating element) also needs not necessarily to be already contacted with the heating element connection port when the heater controller 100 is delivered to the customer. Additionally, the second heating element 193 may also be located at an external position from the heater controller 100 such that the heater controller 100, as shown in Figure 1, can be positioned at any place in the vehicle.

The third switching element 165, which can be denominated as "second high-side switch" (again due to the connection with the high potential from the power supply via the input contact 105), is connected to a second driver 195 which, in turn, receives a second control signal PWM2 from the control element 160. The second driver 195 may also transmit an error-signal F2 to the control element 160 in the case an error in the second switching element is detected. Furthermore the second current sensor 190 of the second serial connection 180 may also transmit a (second) current signal I2 to the control element 160 whereas the fourth switching element 185 may receive a fourth control signal C2 from the control circuit 160.

The control element 160 comprises a galvanic isolation 199 such that on one side of the galvanic isolation 199 it may receive or send control signals (for example via a Bus "Control") or be connected to a low voltage (for example 12 V) and a ground potential and on the other side of the galvanic isolation 199 it may receive or send the above-mentioned signals to the further components of the heater controller 100.

The heater controller 100 according to Figure 1 may function as described in the following paragraphs.

The control element 160 can send the first control signal PWM1 to the first switching element 125 or the first switching element driver 155. The first switching element 125 may be a high-side switch and the first switching element driver 155 may be a high-side driver for transforming, for example, a voltage of a signal of the control element 160 to a voltage which is configured for bringing the first switching element 125 in an on-state or in an off-state. The first control signal PWM1 may be a pulse-width-modulated (PWM) signal having a first and a second signal level, wherein the first signal level (which may be for example a ground potential) indicates the first switching element 125 or the first switching element driver 155 to switch the first switching element 125 in an off-state and wherein the second signal level (which may be for example a voltage of 5 or 12 V) indicates the first switching element 125 or the first switching element driver 155 to switch the first switching element 125 in an on-state. Thus, the first switching element 125 is switched in the off-state during a first period in which the first control signal PWM1 has the first signal level whereas the first switching element 125 is switched in the on-state during a second time interval in which the first control signal PWM1 has the second signal level. Therefore, a heating element 153, which may be connected between the first and second heating connection contacts 130 and 135 may be supplied with a voltage from the input contact 105 during the second period in which the first control signal PWM1 has the second signal level. Using this pulse-width modulated first control signal PWM1 the energy transferred from the input contact 105 to the heating element 153 can be easily regulated by changing the time intervals of the first and second signal levels of the first control signal PWM1.

Furthermore, the heater controller 100 comprises said serial connection 140 which itself comprises the second switching element 145 (which is a low-side switch) and the first current sensor 150, the second switching element 145 and the first current sensor 150 being both connected to the control element 160. Having the serial connection 140 now provides the strong advantages of the present invention as it enables the control element 160 to supervise the correct function of the first switching element 125. As the first high-side switch 125 should be in off-state during the time interval in which the first control signal PWM1 has the first signal level and as the first current sensor 150 sends a current signal representing the current in the serial connection 140 to the control element 160 the control element 160 is able to determine whether there is actually no current flowing through the serial connection 140 during the time interval in which the first control signal PWM1 has the first signal level. However, if the current signal sent by the first current sensor 150 indicates the current in said time interval in which the first control signal PWM1 has the first signal level the control element 160 may be configured for sending a second control signal C1 to the first low-side switch 145 in order to switch the first low-side switch 145 (which is initially or normally during operation of the heater controller 100 in on-state) in an off-state. Thus, a reliable disconnection of the heating element 153 from the power supply can be performed even if the first high-side switch 125 is damaged and is in a permanent short-circuit on-state.

However, according to the inventive approach as shown in the embodiment of Figure 1 the (first) serial connection 140 is positioned in the low side of the heater controller 100, i.e. between the second heating connection port contact 135 and the output contact 110 which may be contacted to the ground potential. This provides the advantage that inexpensive and precise switching elements can be used which do not need to stand high voltages like the first high-side switch 125. Furthermore, the first serial connection 140 may easily be positioned at a different place on a circuit board of the heater controller 100. Additionally using the first serial connection 140 in the low side provides the advantage that an easy measurement of the current can be performed as there is no need to use a current monitor or to measure two voltages across the shunt (with a reference being always the ground potential).

Furthermore it is also possible to supervise the first high-side switch 125 by the first high-side driver 155 (which also may be considered as part of the first high-side switch). For example the high-side driver may include a short-circuit detection mechanism which deactivates the high-side-switch in case of short-circuit current. This is done in hardware so it is extremely fast and does not depend on the state of the control circuit. This detection of a short-circuit current and a timely switching-off of the first high-side switch 125 may then prevent a fusing of internal layers of the electronic element forming the first high-side switch 125 such that a heating-up of elements in the vicinity of the first high-side switch 125 and a possible destruction of these elements can effectively be prevented. Furthermore, the first high-side driver 155 may send an error signal F1 to the control element 160 in order to communicate to the control element 160 that the first high-side switch 125 is damaged and that the (first) heating element 153 cannot be used anymore until the first high-side switch 125 is replaced.

In order to provide a larger heating capacity a second heating element stage 120 (also denoted as heating element level) may be used, which may be contacted in parallel to the first heating element stage 115 between the input contact 105 and the output contact 110.

The configuration of elements of the second heating element stage 120 may be the same as the configuration of elements of the first heating element stage 115 such that the controlling of the second heating element stage 120 by the control element 160 may be performed in an analog way as the controlling of the first heating element stage 115. To be more specific, the control element 160 may send a pulse-width modulated third control signal PWM2 to the third switching element 165 respectively the second switching element driver 195 in order to bring the second high-side switch 165 in an off-state (in a time interval in which the third control signal has a first signal level) or in an on-state (in a time interval in which the third control signal has a second signal level). The second current sensor 190 of the second serial connection 180 may transmit the second current signal I2 to the control element 160 which, in the case a current in the second serial connection 180 is detected during the time interval in which the third control signal PWM2 has the first signal level, may output a fourth control signal C2 to the fourth switching element 185 (respectively the second low-side switch) in order to bring the second low-side switch 185 into an off-state. As the second low-side switch 185 is initially and in a normal operation of the heater controller 100 in an on-state the provision of the second serial connection 180 also enables an inexpensive and precise supervision of the correct function of the second high-side switch 165. However, the second high side switch 165 may also be supervised on the short-circuit fault by the second high-side driver 195 which may be able to bring the second high-side switch 165 in an off-state if such a fusing of the second high-side switch 165 is detected by the second high-side driver 195. The second high-side driver 195 may then communicate a fault signal F2 to the control element 160 in order to inform the control element 160 that a correct switching of power through the second heating element 193 is not guaranteed anymore until the second high-side switch 165 is replaced. Thus, also the second high-side driver may include a short-circuit detection mechanism which deactivates the second high-side switch in case of a short-circuit current. This may be done in hardware so it is extremely fast and does not depend on the state of the control circuit.

However, the present invention is not limited to using it just to heating element stage this 115 or 120 as shown in Figure 1. Rather it is possible to use further (i.e. a third, a fourth, a fifth,...) heating element stages which preferably have the same configuration of elements as the first heating element stage 115 or the second heating element stage 120.

However, the heating elements 153 or 193 as shown in Figure 1 may not be part of the heater controller 100 but they may be connected to the contacts of the first heating element connection port 130 respectively 135 or the contacts of the second heating element connection port 170 respectively 175 while mounting the heater controller 100 into the car or vehicle.

Thus, the problem underlying the present invention can be seen in that in each heating element stage (i.e. PTC level) of the power circuit, an intelligent high-side switch, an intelligent low-side switch and a current-check module are mostly needed. All these modules are driven by a control circuit, which also includes a galvanic isolation. Moreover is the control circuit connected to a very low voltage and has a control interface (e.g. LIN, CAN or PWM signal interface) which connects it to other ECUs.

The inventive approach according to the embodiment shown in Figure 1 provides a solution to the above mentioned problem in that the high-side switch is driving the (PTC-) stages with a certain duty cycle wherein this specific duty cycle is requested through the control interface. In normal operation the low-side-switch is constantly closed, such that the high-side switch is controlling the current flow over the (PTC-) stages. In case the current-check module detects a malfunction of the high-side switch (which may result in a constant current flow even though the PWM-signal forces the first switching element to an off-state) the low-side switch can disconnect the current flow over the specific (PTC-) stage.

However, there are several alternative solutions and possibilities in which the inventive approach can be embodied. One of these possibilities can be seen in an embodiment of the present invention in which the sub-system of the low-side switch and current-check module (i.e. the first or second serial connections 140 or 180 or respective analog serial connections) may be able to disconnect the current flow over two or more heating element stages. Therefore the control element 160 may be configured for bringing the first low-side switch 145 as well as the second low-side switch 185 in an off-state if, for example, the first current sensor 150 detects a current through the serial connection 140 although the first high-side switch 125 should be in an off-state or if the second current sensor 190 indicates a current in the second serial connection 180 although the second high-side switch 165 should be in an off-state. Such an embodiment of the present invention provides the advantage that in the case of one high-side switch failing no current flows through the heating elements of the respective stages. This, in turn, provides an additional security as an at least partly damaged heater controller 100 is only used in little extent. For example if one of the high-side switches fails, the control element 160 may be configured for switching the high-sided switches into an off-state which are located adjacent to the damaged switch on the circuit board of the heater controller 100. Thus, a possible overheating of an area of the heater controller circuit board comprising the damaged high-sided switch can be effectively prevented.

Another possibility of further implementing the present invention can be seen in an embodiment in which the safety relay may be integrated on a hot lead and/or on return lead for redundancy protection. Thus, said safety relay may also open or close an electric connection of the heating elements of the individual heating element stages to the power supply such that an overheating of the heater controller 100 may be effectively prevented.

Furthermore, according to another embodiment of the present invention the safety relay can be implemented for delivering the current flow to all levels or stages of heating elements instead of using just one high-sided switch per level. This would, for example, mean that the first contact 130 of the heating element connection port is contacted to the third contact 170 of the heating element connection port such that the first high-side switch 125 takes over the tasks of the second high-side switch 165 (which, as well as the second high-side driver 195, may then be left away). This would reduce the costs of implementing the heater controller 100 as just one expensive high-side switch 125 is needed. In such an embodiment the control element 160 should take into account the signals of the first current sensor 150 as well as second current sensor 190 in order to determine the second and fourth control signal to the first low-side switch 145 and the second low-side switch 185.

The advantage of the present invention in all its embodiments can be seen in the fact that it provides a very safe high-side switch solution which disconnects completely the voltage from the load if no heating is requested. However, in case of a failing of the high-side switch, the specific heating element level can be reliably disconnected from the power supply (using the low power switch respectively low-side switch) and a compensation can be done.

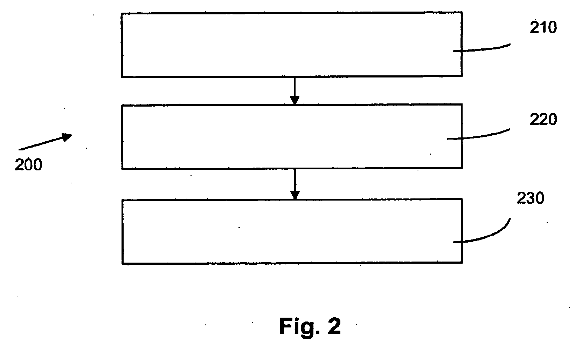

Furthermore, in the description is shown a method 200 for operating a heater controller, a flow diagram of the method being depicted in Fig. 2. The method 200 uses a heater controller as described above and comprises a first step of switching 210 a first switching element in an on-state or an off-state in order to intermittently provide power from an input contact of the heater controller to a first connection contact of a heating element connection port of the heater controller, the first switching element being configured for switching power signals. Furthermore, the method 200 comprises a step of measuring 220 a current in a serial connection and providing a current signal in response of the measured current, wherein the serial connection comprises a current sensor and a second switching element and wherein the serial connection is connected between a second connection contact of the heating element connection port and an output contact of the heater controller. Finally, the method 200 comprises a step for switching 230 the second switching element in an off-state if the current signal indicates a current in the current sensor during a period in which the first switching element is controlled to be in off-state.

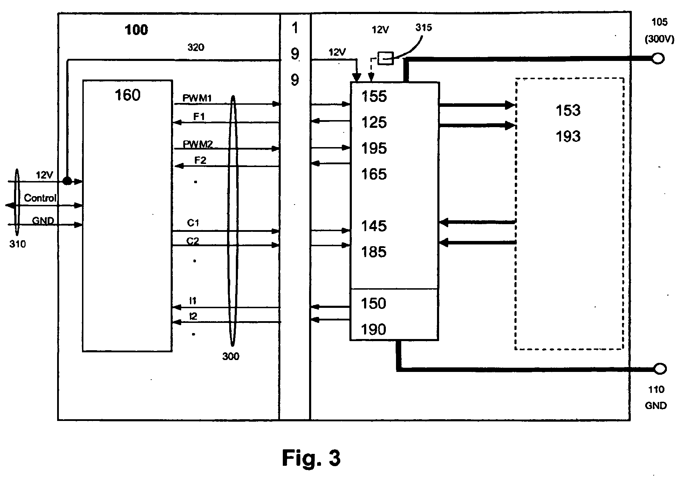

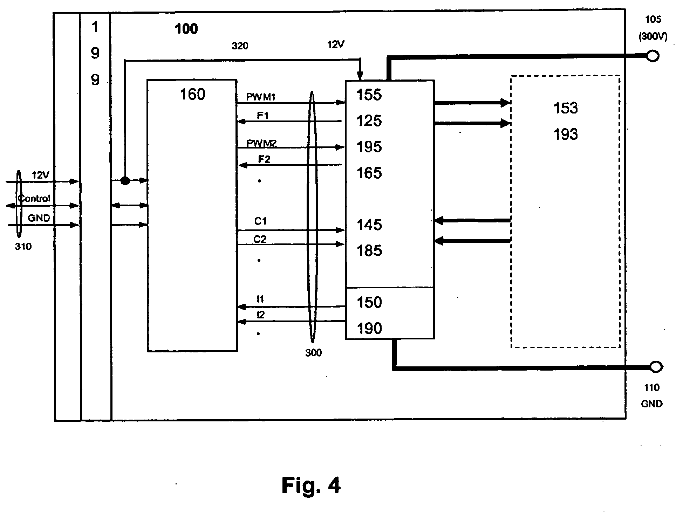

As this new PTC heater controller is intended to be part of air conditioning systems it shall be integrated in new generations of electrical vehicles or other vehicles which contain high voltage networks as already mentioned. Due to the use of high voltage sources in electrical vehicles, there is no more efficient protection between the control circuit and the power circuit. Thus according to another embodiment of the present invention the high-voltage PTC electronic architecture comprises a separate galvanic isolation element 199 as shown in the block diagram according to Figures 3 or 4. The galvanic isolation element 199 acts as an electrical disconnection to electrically or galvanically isolate two sides from each other. The effect of this protection of the control circuit by the galvanic isolation element depends on its integration in the electronic circuit. In a first embodiment according to the configuration of Figure 3 the galvanic isolation element 199 is implemented in the heater system to protect the electronic area from the power area if a failure occurs in the power area. This failure can be for example a shortage or the like such that the high voltage between the power contacts 105 and 110 can break through from the power switch elements 125, 145, 150, 155, 165, 185, 190 or 195 into the control circuit 160. In order to prevent such a breakthrough of high-voltage into the control circuit 160 the galvanic isolation element 199 is connected such that the control signals 300 between the control circuit 160 and the power switch elements 125, 145, 150, 155, 165, 185, 190 or 195 (as for example the signals PWM1, F 1, PWM2, F2, C1, C2, I1 or I2) have to pass of the galvanic isolation element 199. Thus, the galvanic isolation element 199 is implemented between the control circuit area and the high voltage circuit area, to protect not only the connected ECU modules through the low voltage signal interface but also to protect the control circuit against a high voltage circuit failure. Due to the arrangement or connection of the galvanic isolation element 199 between the mentioned power switch elements 125, 145, 150, 155, 165, 185, 190 or 195 and the control circuit 160 the danger of damage of the elements of the control circuit 160 or the elements of an interface 310 having signal levels in the range of for example 0 to 12 V can be effectively prevented. However, it is sometimes nevertheless necessary to provide a low voltage of for example 12 V to distinct elements of the power switch circuit. Such elements may be for example the driver elements 155 or 195. The low voltage of for example 12 V is needed in these elements to activate the first power switch 125 or the second power switch 165 in response to respectively received signals PWM1 or PWM2. In order to provide such low-voltage consuming elements of the power switch circuit 125, 145, 150, 155, 165, 185, 190 and 195 with the respective low voltages these voltages can be provided by reducing the voltage between the input pins 105 and 110 to the desired voltage level via a voltage reduction element 315. Alternatively it is also possible to provide the respective low-voltage consuming elements in the power switch circuit with a voltage directly from the interface 310 via a separate line 320 which then, of course, has also be routed through the galvanic isolation element 199. The galvanic isolation element 199 may be, for example, an optocoupler or an isolating transformer.

Figure 4 shows a block diagram of another embodiment present invention in which the galvanic isolation element 199 is located between the low-voltage interface 310 and the control circuit 160.Thus the galvanic isolation element 199 is implemented to protect mainly the low voltage signal interface 310 so that other ECU modules connected via the low voltage signal interface 310 will not be affected by high voltage failure within the heater controller.

The provision of said galvanic isolation element 199 provides the advantage that a very safe isolation between low and high voltage circuit can be realized. In case of failure in the high voltage circuit, the above described circuit arrangement comprising the galvanic isolation element 199 permits to protect the control circuit 160 as the specific failing PTC levels can be securely disconnected and compensation can be done on other PTC levels.

Furthermore, due to the use of high voltage sources in electrical vehicles, there is a much higher risk of damage in case of failures and so far there was not provided any effective protection within the electronic circuit structure. The efficiency of protection of the electronic components depends on the time to detect a failure and on the proper response to react.

Therefore, the present invention provides another embodiment in which a safety measurement is done after start-up, to protect the ECU module itself and other connected ECU modules. In such a method for detecting a failure in the power electronic elements initially the leakage current through one single and/or each PTC string can be individually measured and compared to a corresponding previously recorded "PTG-LeakageCurrent-Temp" Profile. Should a mismatch in between the measured currents and the corresponding "PTC-LeakageCurrent-Temp" Profile being detected, there is a real problem (e.g. a shortage, a damage or the like ...) detected within the PTC heater and proper action is needed. This action can be seen in for example a switching off of a single damaged PTC heater level or in switching off of the complete PTC heater, i.e. switching off all PTC heater elements.

Alternatively or additionally, if the high-side switches 125 and/or 165 are closed afterwards, the currents can be measured through one single and/or each PTC string and the measured values are compared to a previously recorded corresponding "PTC-Current-Temp"-Profile. Should a mismatch in between the measured currents and the corresponding "PTC-Current-Temp"-Profile being detected, there is also a real problem (e.g. a shortage, a damage or the like ...) detected within the PTC heater and proper action is needed.

Such an approach provides the further advantage that a possible supplementary measurement can be accomplished to prevent the electronic elements and the PTC elements from possible failure in the air conditioning system. For this it is necessary to measure the isolation resistance between a supplementary wire and/or a cover at nominal high voltage and compare it to a reference value. Furthermore, a possible supplementary measurement which can be done by switching-on the control circuit 160 is to generate a heating profile (for example low values on the command) and verify if the power heating is different than the awaited nominal value.

The above described approach provides the advantage that the described circuitry according to the Figures 1, 3 or 4 can be used further. However, this measurement which can be done at the beginning of the usage of the PTC heater element permits to avoid further deterioration of the product due to a nominal heating at 100%.

## Claims

1. Heater controller (100) for supervising a heating element, the heater controller (100) comprising the following features:
- a power connection port (105, 110) for connecting the heater controller (100) with a power source, the power connection port (105, 110) having an input contact (105) and an output contact (110);
- a heating element connection port (130, 135) for connecting the heater controller (100) with at least one heating element (153), the heating element connection port (130, 135) having a first (130) and a second (135) connection contact;
- a first switching element (125) being connected between the input contact (105) and the first contact (130) of the heating element connection port, the first switching element (125) being configured for switching power signals;
- a serial connection (140), comprising a second switching element (145) and a current sensor (150), the serial connection (140) being connected between the second contact (135) of the heating element connection port and the output contact (110), the current sensor (150) being configured for providing a current signal representing a current through the current sensor (150); and
- a control element (160) being connected to the first (125) and second (145) switching element as well as to the current sensor (150), the control element (160) being configured for providing a first control signal to the first switching element (125) to switch the first switching element (125) in an on-state or in an off-state, wherein the control element (160) being furthermore configured for receiving the current signal from the current sensor (150) and for providing a second control signal to the second switching element (145) to disconnect an electrical connection between the second connection contact (135) and the output contact (110) in the case the current signal indicates a current through the current sensor (150) in a time interval in which the control element (160) controls the first switching element (125) to be in the off-state,
wherein the first switching element (125) is configured for detecting a short-circuit through the first switching element (125), wherein the first switching element (125) is furthermore configured for bringing the first switching element (125) in an off-state if a short-circuit is detected in the first switching element (125).

2. Heater controller (100) according to claim 1, **characterized in that** the second switching element (145) is configured for switching between an on-state and an off-state, wherein the second switching element (145) initially is in the on-state.

3. Heater controller (100) according to one of claims 1 to 2, **characterized in that** a heating element (153), especially a PTC heating element, is connected between the first (130) and second (135) connection contact of the heating element connection port.

4. Heater controller (100) according to one of claims 1 to 3, **characterized in that** it comprises a safety relay being connected between the serial connection (140) and the output contact (110) or being connected between the input contact (105) and the first switching element (125).

5. Heater controller (100) according to one of claims 1 to 4, **characterized in that** the heating element connection port has a third (170) and a fourth (175) connection contact, the third connection contact (170) being connected to the input contact (105) via the first switching element (125) or a third switching element (165), the heater controller (100) furthermore having a second serial connection (180) comprising a fourth switching element (185) and a second current sensor (190) for providing a second current signal indicating a current through the second current sensor (190), the second serial connection (180) being connected between the fourth connection contact (175) of the heating element connection port and the output contact (110) and wherein the control element (160) being connected to the fourth switching element (185) and the second current sensor (190), the control element (160) being furthermore configured for providing the first control signal to the first switching element (125) or for providing a third control signal to the third switching element (165) to switch the third switching element (165) in an on-state or in an off-state, the control element (160) being furthermore configured for receiving the second current signal from the second current sensor (190) and for providing a fourth control signal to the fourth switching element (185) to disconnect an electrical connection between the fourth connection contact (175) and the output contact (110) in the case the second current signal indicates a current through the second current sensor (190) in a time interval in which the control element (160) controls the first (125) or third (165) switching element to be in the off-state.

6. Heater controller (100) according to claim 5, the heater controller (100) comprising the first (125) and the third (165) switching element, **characterized in that** the control element (160) is configured for switching the second switching element (145) in an off-state if the second current signal indicates a current through the second current sensor (190) in a time interval in which the third switching element (165) is controlled to be in an off-state and/or wherein the control element (160) is configured for switching the fourth switching element (185) in an off-state if the current signal indicates a current through the current sensor (150) in a time interval in which the first switching element (125) is controlled to be in an off-state.

7. Heater controller (100) according to one of claims 5 to 6, **characterized in that** the control element (160) is configured for controlling the first (125) and third (165) switching elements such that the time intervals of the on-states of the first (125) and third (165) switching elements are phase shifted.

8. Heater controller (100) according to one of claims 1 to 7, **characterized in that** the heater controller (100) comprises a galvanic isolation element (199) which is arranged to galvanically or electrically isolate the control element (160) on a first side from the first switching element (125) and the serial connection (140) on a second side.

9. Heater controller (100) according to one of claims 1 to 7, **characterized in that** the heater controller (100) comprises a galvanic isolation element (199) which is arranged to galvanically or electrically isolate the control element (160), the first switching element (125) and the serial connection (140) on a first side from a signal bus on a second side, wherein the signal bus is configured to provide control signals (310) to the control element (160) in order to control operations of the control element (160).

10. Heater controller (100) according to one of claims 1 to 7, **characterized in that** a voltage reduction element (315) is coupled between the input contact (105) and the first switching element (125) or the first driver (155), the voltage reduction element (315) being configured for reducing the voltage between the input contact (105) and the output contact and for providing a reduced voltage to first switching element (125) or the first driver (155).

11. Heater controller (100) according to one of claims 1 to 10, **characterized in that** the control element (160) is configured to compare the signal received from the current sensor (150) in an off-state of the first switching element (125) with an expected signal from the current sensor (150) when the first switching element (125) is in off-state and wherein the control element (160) is furthermore configured for outputting an error signal, if the received signal from the current sensor (150) departs from the expected signal by more than a predefined value.

12. Heater controller (100) according to one of claims 1 to 11, **characterized in that** the control element (160) is configured to compare the signal received from the current sensor (150) in an on-state of the first switching element (125) with an expected signal from the current sensor (150) when the first switching element (125) is in on-state and wherein the control element (160) is furthermore configured for outputting an error signal, if the received signal from the current sensor (150) departs from the expected signal by more than a predefined value.

## Patentansprüche

1. Heizsteuerung (100) zur Überwachung eines Heizelements, wobei die Heizsteuerung (100) die folgenden Merkmale umfasst:
- eine Stromanschlussschnittstelle (105, 110) zum Anschluss der Heizsteuerung (100) an eine Stromquelle, wobei die Stromanschlussschnittstelle (105, 110) einen Eingangskontakt (105) und einen Ausgangskontakt (110) aufweist;
- eine Heizelementanschlussschnittstelle (130, 135) zum Anschluss der Heizsteuerung (100) an mindestens ein Heizelement (153), wobei die Heizelementanschlussschnittstelle (130, 135) einen ersten (130) und einen zweiten (135) Anschlusskontakt aufweist;
- ein erstes Schaltelement (125), das zwischen dem Eingangskontakt (105) und dem ersten Kontakt (130) der Heizelementanschlussschnittstelle angeschlossen ist, wobei das erste Schaltelement (125) zum Schalten von Leistungssignalen konfiguriert ist;
- eine serielle Verbindung (140), umfassend ein zweites Schaltelement (145) und einen Stromsensor (150), wobei die serielle Verbindung (140) zwischen dem zweiten Kontakt (135) der Heizelementanschlussschnittstelle und dem Ausgangskontakt (110) angeschlossen ist, wobei der Stromsensor (150) zum Bereitstellen eines Stromsignals, das einen Strom durch den Stromsensor (150) darstellt, konfiguriert ist; und
- ein Steuerelement (160), das an das erste (125) und zweite (145) Schaltelement sowie an den Stromsensor (150) angeschlossen ist, wobei das Steuerelement (160) so konfiguriert ist, dass es dem ersten Schaltelement (125) ein erstes Steuersignal bereitstellt, um das erste Schaltelement (125) in einen Ein-Zustand oder in einen Aus-Zustand zu schalten, wobei das Steuerelement (160) weiter so konfiguriert ist, dass es das Stromsignal von dem Stromsensor (150) empfängt und dem zweiten Schaltelement (145) ein zweites Steuersignal bereitstellt, um eine elektrische Verbindung zwischen dem zweiten Anschlusskontakt (135) und dem Ausgangskontakt (110) zu trennen, wenn das Stromsignal auf einen Strom durch den Stromsensor (150) in einem Zeitintervall, in dem das Steuerelement (160) das erste Schaltelement (125) so steuert, dass es sich im Aus-Zustand befindet, hinweist,
wobei das erste Schaltelement (125) so konfiguriert ist, dass es einen Kurzschluss durch das erste Schaltelement (125) feststellt, wobei das erste Schaltelement (125) weiter so konfiguriert ist, dass es das erste Schaltelement (125) in einen Aus-Zustand bringt, wenn in dem ersten Schaltelement (125) ein Kurzschluss festgestellt wird.

2. Heizsteuerung (100) nach Anspruch 1, **dadurch gekennzeichnet, dass** das zweite Schaltelement (145) zum Schalten zwischen einem Ein-Zustand und einem Aus-Zustand konfiguriert ist, wobei sich das zweite Schaltelement (145) anfangs im Ein-Zustand befindet.

3. Heizsteuerung (100) nach einem der Ansprüche 1 bis 2, **dadurch gekennzeichnet, dass** ein Heizelement (153), insbesondere ein PTC-Heizelement, zwischen dem ersten (130) und zweiten (135) Anschlusskontakt der Heizelementanschlussschnittstelle angeschlossen ist.

4. Heizsteuerung (100) nach einem der Ansprüche 1 bis 3, **dadurch gekennzeichnet, dass** sie ein Sicherheitsrelais umfasst, das zwischen der seriellen Verbindung (140) und dem Ausgangskontakt (110) angeschlossen ist oder zwischen dem Eingangskontakt (105) und dem ersten Schaltelement (125) angeschlossen ist.

5. Heizsteuerung (100) nach einem der Ansprüche 1 bis 4, **dadurch gekennzeichnet, dass** die Heizelementanschlussschnittstelle einen dritten (170) und einen vierten (175) Anschlusskontakt aufweist, wobei der dritte Anschlusskontakt (170) über das erste Schaltelement (125) oder ein drittes Schaltelement (165) an den Eingangskontakt (105) angeschlossen ist, die Heizsteuerung (100) weiter eine zweite serielle Verbindung (180) aufweist, die ein viertes Schaltelement (185) und einen zweiten Stromsensor (190) umfasst, um ein zweites Stromsignal bereitzustellen, das auf einen Strom durch den zweiten Stromsensor (190) hinweist, wobei die zweite serielle Verbindung (180) zwischen dem vierten Anschlusskontakt (175) der Heizelementanschlussschnittstelle und dem Ausgangskontakt (110) angeschlossen ist und wobei das Steuerelement (160) an das vierte Schaltelement (185) und den zweiten Stromsensor (190) angeschlossen ist, wobei das Steuerelement (160) weiter so konfiguriert ist, dass es dem ersten Schaltelement (125) das erste Steuersignal bereitstellt oder dem dritten Schaltelement (165) ein drittes Steuersignal bereitstellt, um das dritte Schaltelement (165) in einen Ein-Zustand oder in einen Aus-Zustand zu schalten, wobei das Steuerelement (160) weiter so konfiguriert ist, dass es das zweite Stromsignal von dem zweiten Stromsensor (190) empfängt und dem vierten Schaltelement (185) ein viertes Steuersignal bereitstellt, um eine elektrische Verbindung zwischen dem vierten Anschlusskontakt (175) und dem Ausgangskontakt (110) zu trennen, wenn das zweite Stromsignal auf einen Strom durch den zweiten Stromsensor (190) in einem Zeitintervall, in dem das Steuerelement (160) das erste (125) oder dritte (165) Schaltelement so steuert, dass es sich im Aus-Zustand befindet, hinweist.

6. Heizsteuerung (100) nach Anspruch 5, wobei die Heizsteuerung (100) das erste (125) und das dritte (165) Schaltelement umfasst, **dadurch gekennzeichnet, dass** das Steuerelement (160) so konfiguriert ist, dass es das zweite Schaltelement (145) in einen AusZustand schaltet, wenn das zweite Stromsignal auf einen Strom durch den zweiten Stromsensor (190) in einem Zeitintervall, in dem das dritte Schaltelement (165) so gesteuert wird, dass es sich in einem AusZustand befindet, hinweist, und/oder wobei das Steuerelement (160) so konfiguriert ist, dass es das vierte Schaltelement (185) in einen Aus-Zustand schaltet, wenn das Stromsignal auf einen Strom durch den Stromsensor (150) in einem Zeitintervall, in dem das erste Schaltelement (125) so gesteuert wird, dass es sich in einem Aus-Zustand befindet, hinweist.

7. Heizsteuerung (100) nach einem der Ansprüche 5 bis 6, **dadurch gekennzeichnet, dass** das Steuerelement (160) so konfiguriert ist, dass es das erste (125) und dritte (165) Schaltelement so steuert, dass die Zeitintervalle der Ein-Zustände des ersten (125) und dritten (165) Schaltelements phasenverschoben sind.

8. Heizsteuerung (100) nach einem der Ansprüche 1 bis 7, **dadurch gekennzeichnet, dass** die Heizsteuerung (100) ein galvanisches Trennelement (199) umfasst, das so angeordnet ist, dass es das Steuerelement (160) auf einer ersten Seite von dem ersten Schaltelement (125) und der seriellen Verbindung (140) auf einer zweiten Seite galvanisch oder elektrisch trennt.

9. Heizsteuerung (100) nach einem der Ansprüche 1 bis 7, **dadurch gekennzeichnet, dass** die Heizsteuerung (100) ein galvanisches Trennelement (199) umfasst, das so angeordnet ist, dass es das Steuerelement (160), das erste Schaltelement (125) und die serielle Verbindung (140) auf einer ersten Seite von einem Signalbus auf einer zweiten Seite galvanisch oder elektrisch trennt, wobei der Signalbus so konfiguriert ist, dass er dem Steuerelement (160) Steuersignale (310) bereitstellt, um Operationen des Steuerelements (160) zu steuern.

10. Heizsteuerung (100) nach einem der Ansprüche 1 bis 7, **dadurch gekennzeichnet, dass** ein Spannungsreduktionselement (315) zwischen dem Eingangskontakt (105) und dem ersten Schaltelement (125) oder dem ersten Treiber (155) angeschlossen ist, wobei das Spannungsreduktionselement (315) so konfiguriert ist, dass es die Spannung zwischen dem Eingangskontakt (105) und dem Ausgangskontakt reduziert und dem ersten Schaltelement (125) oder dem ersten Treiber (155) eine reduzierte Spannung bereitstellt.

11. Heizsteuerung (100) nach einem der Ansprüche 1 bis 10, **dadurch gekennzeichnet, dass** das Steuerelement (160) so konfiguriert ist, dass es das vom Stromsensor (150) in einem Aus-Zustand des ersten Schaltelements (125) empfangene Signal mit einem erwarteten Signal vom Stromsensor (150) vergleicht, wenn sich das erste Schaltelement (125) in einem AusZustand befindet, und wobei das Steuerelement (160) weiter so konfiguriert ist, dass es ein Fehlersignal ausgibt, wenn das vom Stromsensor (150) empfangene Signal von dem erwarteten Signal um mehr als einen vordefinierten Wert abweicht.

12. Heizsteuerung (100) nach einem der Ansprüche 1 bis 11, **dadurch gekennzeichnet, dass** das Steuerelement (160) so konfiguriert ist, dass es das vom Stromsensor (150) in einem An-Zustand des ersten Schaltelements (125) empfangene Signal mit einem erwarteten Signal vom Stromsensor (150) vergleicht, wenn sich das erste Schaltelement (125) in einem AnZustand befindet, und wobei das Steuerelement (160) weiter so konfiguriert ist, dass es ein Fehlersignal ausgibt, wenn das vom Stromsensor (150) empfangene Signal von dem erwarteten Signal um mehr als einen vordefinierten Wert abweicht.

## Revendications

1. Commande de chauffage (100) pour contrôler un élément chauffant, la commande de chauffage (100) ayant les éléments caractéristiques suivants :
- un port de connexion du bloc d'alimentation (105, 110) pour connecter la commande de chauffage (100) à une source d'alimentation, le port de connexion du bloc d'alimentation (105, 110) ayant un contact d'entrée (105) et un contact de sortie (110) ;
- un port de connexion (130, 135) de l'élément chauffant pour connecter la commande de chauffage (100) à au moins un élément chauffant (153), le port de connexion (130, 135) de l'élément chauffant ayant un premier (130) et un deuxième (135) contact de connexion ;
- un premier élément de commutation (125) est connecté entre le contact d'entrée (105) et le premier contact (130) du port de connexion de l'élément chauffant, le premier élément de commutation (125) étant configuré pour commuter des signaux d'alimentation ;
- une connexion en série (140) comprend un deuxième élément de commutation (145) et un détecteur de courant (150), la connexion en série (140) étant connectée entre le deuxième contact (135) du port de connexion de l'élément chauffant, et le contact de sortie (110), le détecteur de courant (150) étant configuré pour fournir un signal de courant représentant un courant traversant le détecteur de courant (150) ; et
- un élément de commande (160) est connecté au premier (125) et au deuxième (145) élément de commutation ainsi qu'au détecteur de courant (150), l'élément de commande (160) étant configuré pour fournir un premier signal de commande au premier élément de commutation (125), pour faire passer le premier élément de commutation (125) dans un état passant ou dans un état bloqué, où l'élément de commande (160) est configuré en outre pour recevoir le signal de courant provenant du détecteur de courant (150) et pour fournir un deuxième signal de commande au deuxième élément de commutation (145), afin de déconnecter une connexion électrique établie entre le deuxième contact de connexion (135) et le contact de sortie (110), au cas où le signal de courant indique un courant traversant le détecteur de courant (150), dans un intervalle de temps au cours duquel l'élément de commande (160) commande le premier élément de commutation (125) devant être dans l'état bloqué, où le premier élément de commutation (125) est configuré pour détecter un court-circuit se produisant dans le premier élément de commutation (125), où le premier élément de commutation (125) est configuré en outre pour placer le premier élément de commutation (125) dans un état bloqué, si un court-circuit est détecté dans le premier élément de commutation (125).

2. Commande de chauffage (100) selon la revendication 1, **caractérisée en ce que** le deuxième élément de commutation (145) est configuré pour assurer la commutation entre un état passant et un état bloqué, où le deuxième élément de commutation (145) est initialement dans l'état passant.

3. Commande de chauffage (100) selon l'une quelconque des revendications 1 à 2, **caractérisée en ce qu'**un élément chauffant (153), notamment un élément chauffant à coefficient de température positif (CTP), est connecté entre le premier (130) et le deuxième (135) contact de connexion du port de connexion de l'élément chauffant.

4. Commande de chauffage (100) selon l'une quelconque des revendications 1 à 3, **caractérisée en ce qu'**elle comprend un relais de sécurité connecté entre la connexion en série (140) et le contact de sortie (110), ou bien connecté entre le contact d'entrée (105) et le premier élément de commutation (125).

5. Commande de chauffage (100) selon l'une quelconque des revendications 1 à 4, **caractérisée en ce que** le port de connexion de l'élément chauffant a un troisième (170) et un quatrième (175) contact de connexion, le troisième contact de connexion (170) étant connecté au contact d'entrée (105) via le premier élément de commutation (125) ou via un troisième élément de commutation (165), la commande de chauffage (100) ayant en outre une deuxième connexion en série (180) comprenant un quatrième élément de commutation (185) et un deuxième détecteur de courant (190), pour fournir un deuxième signal de courant indiquant un courant traversant le deuxième détecteur de courant (190), la deuxième connexion en série (180) étant connectée entre le quatrième contact de connexion (175) du port de connexion de l'élément chauffant, et le contact de sortie (110), et où l'élément de commande (160) est connecté au quatrième élément de commutation (185) et au deuxième détecteur de courant (190), l'élément de commande (160) étant configuré en outre pour fournir le premier signal de commande au premier élément de commutation (125), ou bien pour fournir un troisième signal de commande au troisième élément de commutation (165), afin de faire passer le troisième élément de commutation (165) dans un état passant ou dans un état bloqué, l'élément de commande (160) étant configuré en outre pour recevoir le deuxième signal de courant provenant du deuxième détecteur de courant (190), et pour fournir un quatrième signal de commande au quatrième élément de commutation (185), afin de déconnecter une connexion électrique établie entre le quatrième contact de connexion (175) et le contact de sortie (110), au cas où le deuxième signal de courant indique un courant traversant le deuxième détecteur de courant (190), dans un intervalle de temps au cours duquel l'élément de commande (160) commande le premier (125) ou le troisième (165) élément de commutation devant être dans l'état bloqué.

6. Commande de chauffage (100) selon la revendication 5, la commande de chauffage (100) comprenant le premier (125) et le troisième (165) élément de commutation, **caractérisée en ce que** l'élément de commande (160) est configuré pour faire passer le deuxième élément de commutation (145) dans un état bloqué, si le deuxième signal de courant indique un courant traversant le deuxième détecteur de courant (190), dans un intervalle de temps au cours duquel le troisième élément de commutation (165) est commandé pour être dans un état bloqué et / ou l'élément de commande (160) est configuré pour faire passer le quatrième élément de commutation (185) dans un état bloqué, si le signal de courant indique un courant traversant le détecteur de courant (150), dans un intervalle de temps au cours duquel le premier élément de commutation (125) est commandé pour être dans un état bloqué.

7. Commande de chauffage (100) selon l'une quelconque des revendications 5 à 6, **caractérisée en ce que** l'élément de commande (160) est configuré pour commander le premier (125) et le troisième (165) élément de commutation, de manière telle que les intervalles de temps des états passants du premier (125) et du troisième (165) élément de commutation soient décalés en phase.

8. Commande de chauffage (100) selon l'une quelconque des revendications 1 à 7, **caractérisée en ce que** la commande de chauffage (100) comprend un élément d'isolation galvanique (199) qui est agencé pour isoler galvaniquement ou électriquement l'élément de commande (160) sur un premier côté, du premier élément de commutation (125), et la connexion en série (140) sur un second côté.

9. Commande de chauffage (100) selon l'une quelconque des revendications 1 à 7, **caractérisée en ce que** la commande de chauffage (100) comprend un élément d'isolation galvanique (199) qui est agencé pour isoler galvaniquement ou électriquement l'élément de commande (160), le premier élément de commutation (125) et la connexion en série (140) sur un premier côté, d'un bus de signaux sur un second côté, où le bus de signaux est configuré pour fournir des signaux de commande (310) à l'élément de commande (160), afin de contrôler des fonctionnements de l'élément de commande (160).

10. Commande de chauffage (100) selon l'une quelconque des revendications 1 à 7, **caractérisée en ce qu'**un élément de réduction de tension (315) est couplé entre le contact d'entrée (105) et le premier élément de commutation (125) ou le premier pilote (155), l'élément de réduction de tension (315) étant configuré pour réduire la tension entre le contact d'entrée (105) et le contact de sortie, et pour fournir une tension réduite au premier élément de commutation (125) ou au premier pilote (155).

11. Commande de chauffage (100) selon l'une quelconque des revendications 1 à 10, **caractérisée en ce que** l'élément de commande (160) est configuré pour comparer le signal reçu du détecteur de courant (150) dans un état bloqué du premier élément de commutation (125), à un signal attendu provenant du détecteur de courant (150), quand le premier élément de commutation (125) est dans un état bloqué, et où l'élément de commande (160) est configuré en outre pour émettre un signal d'erreur, si le signal reçu en provenance du détecteur de courant (150) s'écarte du signal attendu, de plus d'une valeur prédéfinie.

12. Commande de chauffage (100) selon l'une quelconque des revendications 1 à 11, **caractérisée en ce que** l'élément de commande (160) est configuré pour comparer le signal reçu en provenance du détecteur de courant (150), dans un état passant du premier élément de commutation (125), à un signal attendu provenant du détecteur de courant (150), quand le premier élément de commutation (125) est dans un état passant, et où l'élément de commande (160) est configuré en outre pour émettre un signal d'erreur, si le signal reçu en provenance du détecteur de courant (150) s'écarte du signal attendu, de plus d'une valeur prédéfinie.
